# EUROPEAN PATENT SPECIFICATION

(11) **EP 0 903 994 B1**
(45) Date of publication and mention of the grant of the patent: **10.12.2003**
(21) Application number: 97919729.0
(22) Date of filing: 23.04.1997
(51) Int. Cl.: A47J 31/06

(54) **CARTRIDGE HOLDER FOR PREPARING A CUP OF COFFEE WITH A SMALL-BUBBLE FOAM LAYER**
PATRONENBEHÄLTER ZUR BEREITUNG EINER TASSE KAFFEE MIT EINER FEINPORIGEN SCHAUMSCHICHT
PORTE DOSE DESTINE A LA PREPARATION D'UNE TASSE DE CAFE AVEC UNE COUCHE DE MOUSSE A FINES BULLES

(30) Priority: 23.04.1996 NL 1002929
(43) Date of publication of application: 31.03.1999
(73) Proprietor: Sara Lee/DE N.V., 3532 AA Utrecht (NL)
(72) Inventor: DIJS, Daniel, Albertus, Jozef, NL-3533 VP Utrecht (NL); LAURENS, Rogier, Vincent, NL-1057 EG Amsterdam (NL)
(74) Representative: Smulders, Theodorus A.H.J., Ir.
(86) International application number: NL9700208
(87) International publication number: WO97039668

(56) References cited:
- DE-U- 29 502 595
- FR-A- 2 636 828

## Description

The invention relates to an assembly according to the precharacterising portion of claim 1.

Such an assembly is known from, inter alia, "Gebrauchsmuster" 295 02 595. In this known assembly two outflow openings are provided in the bottom. Placed on this bottom is a spherical element covering the two outflow openings. The spherical element consists of vertical side walls and a spherical top wall, a plurality of outflow openings being provided in the vertical side walls. The coffee filter comprises a refillable bowl-shaped element made of a rigid material, such as metal. The coffee filter is open on the upper side so that it can be filled by a user with ground coffee. Provided in the bottom of the coffee filter are fine-meshed openings, in a manner such that the bottom forms a barrier to ground coffee and a passage for the coffee extract formed in the coffee filter.

The operation of the known apparatus is as follows. First, the coffee filter is filled by a user with ground coffee. Then the coffee filter is placed in the filter holder. The filter holder is then connected to a coffee maker. The coffee maker passes hot water under high pressure to the coffee filter in the filter holder. In the coffee filter the ground coffee is pressed together to form a compact whole. Thus a high pressure is built up in the coffee filter. This has the result that the coffee extract is pressed outwards via the openings in the bottom of the coffee filter. When the coffee extract is pressed outwards, bubbles are formed in the space located in the filter holder between the bottom of the coffee filter and the top wall of the spherical covering. The bubbles present in this space, the cross-section of which exceeds the cross-section of the through-flow openings of the spherical covering, cannot leave this space and will therefore disappear. However, bubbles that are smaller will leave the filter holder via the openings in the spherical covering and the outflow openings in the bottom of the filter holder. Thus, via these outflow openings a coffee extract is delivered which can be collected in a cup placed under the assembly. In the cup filled with coffee extract a foam layer will be present on the coffee extract. It is a drawback of the known assembly that it is necessary to build up in the coffee filter a pressure for forming the bubbles. This involves that the coffee filter must be of completely rigid construction, so that it is impossible to make use of a paper filter; for in that case a compact coffee bed partly responsible for building up the high pressure will not be formed. The use of a coffee filter provided with a paper filter, however, has in the first place the advantage that a coffee extract having an improved taste is obtained. Moreover, such a coffee filter can be designed in an economically very advantageous manner so that this coffee filter may even be a disposable filter cartridge. A further drawback of the known apparatus is that the dimensions of the openings of the coffee filter are based on a compromise. On the one hand, the openings must not be too large because coffee grains are not allowed to pass. On the other hand, the openings must be large enough to enable the formation of bubbles.

The assembly according to the invention removes these drawbacks and is characterized by the characterising portion of claim 1.

When in the assembly according to the invention hot water is supplied to the filter holder, this hot water will extract in the ground coffee contained in the coffee filter. Since the coffee filter comprises a paper filter, the hot water will in the first instance flow through the coffee filter without a high pressure being built up in the coffee filter. The separation plate, however, results in a high pressure being built up yet on the side of the separation plate where the coffee filter is located. The coffee extract will be forced out through the jet openings of the separation plate into a layer of extract already collected on the bottom of the filter holder and that with an intensity such that bubbles are formed in the above-mentioned interspace. The coffee extract, together with at least part of the bubbles formed, can leave the filter holder via the at least one outflow opening to fill a cup. Thus the cup is filled with coffee extract provided with a foam layer. An advantage is that the separation plate can be optimally dimensioned to generate bubbles; for the separation plate does not function as a filter.

Preferably, the separation plate is a screen plate comprising a plurality of screen openings each having a through-flow surface much smaller than the through-flow surface of the at least one jet opening. It turns out that with such a separation plate a foam is formed, the foam picture of which on the coffee is optimal.

The invention will now be explained in more detail with reference to the accompanying drawings in which:
Fig. 1A is a cross-sectional view of a possible embodiment of an assembly according to the invention comprising a cartridge holder with a coffee filter cartridge placed therein;
Fig. 1B is a top view in the direction of the arrow P shown in Fig. 1A of the cartridge holder without coffee filter cartridge;
Fig. 2A is a bottom view of the coffee filter cartridge of Fig. 1A;
Fig. 2B is a top view in the direction of the arrow P shown in Fig. 1A of the coffee filter cartridge of Fig. 2A;
Fig. 2C is a cross-sectional view of the coffee filter cartridge of Fig. 2A;
Fig. 3 is a cross-sectional view of a part of the separation plate 16 of Fig. 1; and
Fig. 4 is a cross-sectional view of an outflow opening of the assembly of Fig. 1.

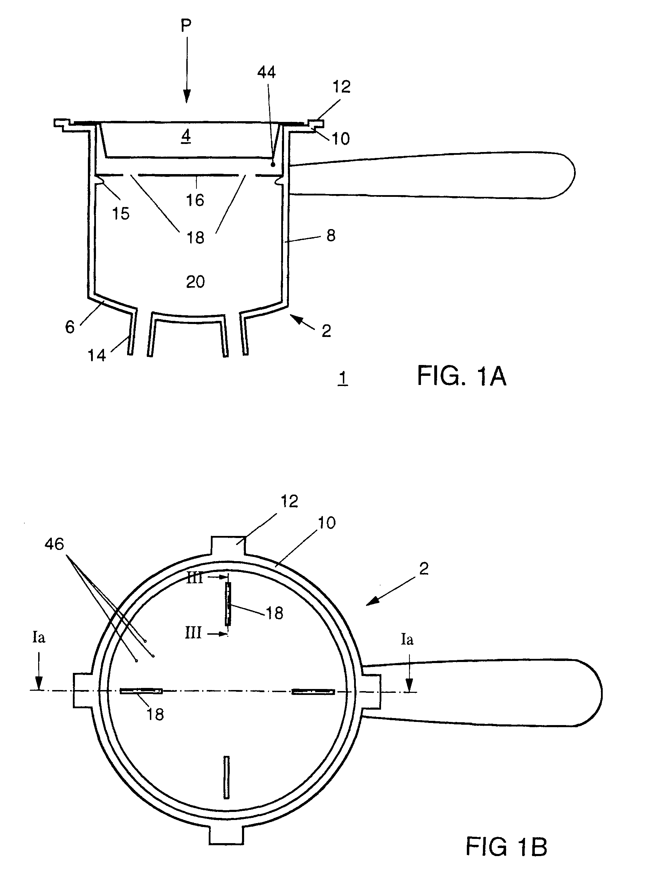

In Fig. 1A reference numeral 1 denotes a possible embodiment of an assembly according to the invention. The assembly comprises a filter holder 2 and a coffee filter 4 which is removably placed in the filter holder 2. In this example the coffee filter 4 is a disposable coffee filter cartridge 4.

The filter holder 2 comprises a preferably bowl-shaped bottom 6 and a vertical side wall 8 extending from the bottom 6 upwards. The vertical side wall 8 is provided at its upper end with a flange 10 radially extending from the filter holder 2 outwards. Proportionally distributed over the circumference of the flange are, for instance, four projections 12 used for coupling the filter holder to a coffee maker. In this example two outflow openings 14 are provided in the bottom 6 of the filter holder 2. The vertical side wall 8 is provided on the inside with a flange 15 radially extending inwards and supporting a separation plate 16.

In this example the separation plate is provided with four rectangular jet openings 18. Located between the lower side of the separation plate 16 and the bottom 6 of the filter holder is an interspace 20. As shown in Fig. 1A, the separation plate 16 is, in this example, disposed right under the coffee filter cartridge 4.

In this example the coffee filter cartridge 4 is a disposable cartridge with a bottom 22, a top wall 24 and an upright side wall 26 connecting the bottom 22 and the top wall 24 together. The top wall 24 is provided on the outside with a flange 28 radially extending outwards. The side wall 26 and a part of the bottom 22 are made of a rigid material, in this case, for instance, plastic. The rigid part of the bottom 22 has the form of a cross 30, in the middle of which cross 30 a circular plate 32 is formed. The rest of the bottom 22 consists of filter paper 34. The filter paper is connected near its circumferential edge 36 to a rigid part of the bottom 22. In this example the top wall 24 is completely made of filter paper which is connected near its circumferential edge 38 to an upper edge 40 of the upright side wall 26. The coffee filter is filled with a quantity of ground coffee 42.

When the coffee filter cartridge is placed in the filter holder 2, the coffee filter cartridge 4 rests with its flange 28 on the flange 10 of the filter holder. The assembly is now ready for use. For this purpose, the assembly is connected to a coffee maker (not shown). At the top of the filter holder 2 the coffee maker supplies hot water to the filter holder 2 and thus to the coffee filter cartridge 4. This water will reach the ground coffee 42 in the coffee filter cartridge 4 via the filter paper 24. The ground coffee will thus be extracted. The coffee extract then leaves the coffee filter cartridge 4 via the filter paper 34. In the first instance, no appreciable high pressure will then be built up in the coffee filter cartridge 4. This is due to the fact that the filter paper easily passes the coffee extract. On the other hand, the filter paper forms a barrier to the ground coffee.

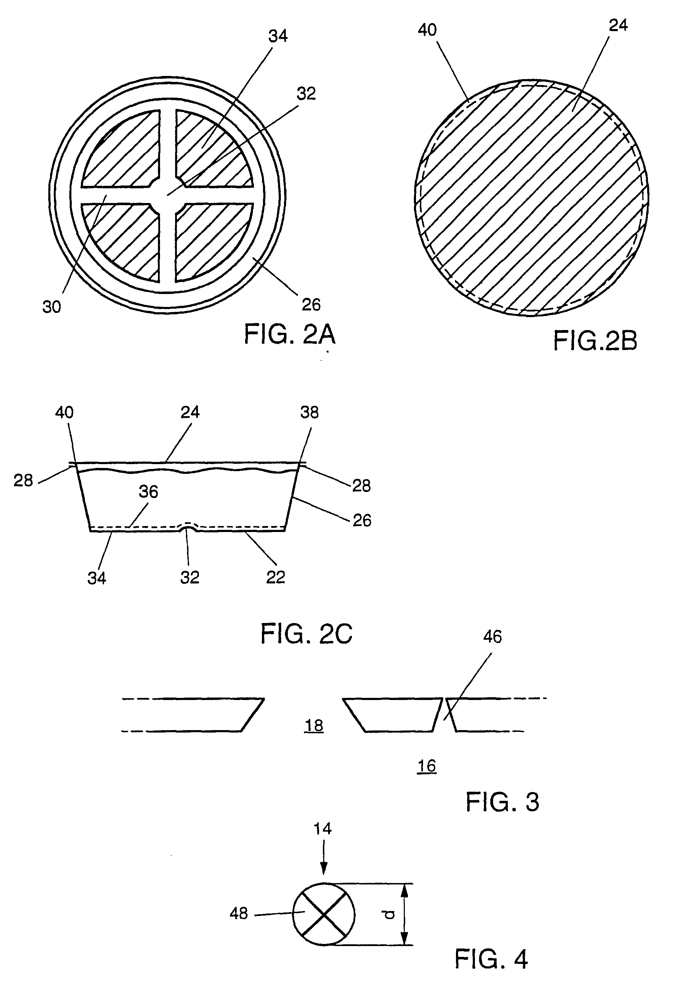

The coffee extract then flows in the direction of the separation plate 16. As a result of the separation plate the through-flow of the coffee extract will be retarded. This has the result that a high pressure is gradually built up in the space 44 above the separation plate, that is to say in the space above the separation plate of the filter holder in which the coffee filter cartridge 4 is located. When the pressure has been built up, the coffee extract will be forced out of the jet openings 18 into the interspace 20. In the interspace 20 bubbles will be formed as a result of the force of the jets and the layer of coffee extract from the jet openings 18 already collected on the bowl-shaped bottom 6. The space 44 is therefore important for building up a liquid pressure so that coffee extract is going to be forced out of the jet openings into the space 20. The space 20 with the bowl-shaped bottom partly filled with coffee extract is then important so that the above-mentioned jets can form bubbles. Bubbles having dimensions smaller than the through-flow surfaces of the outlet openings 14 will flow, together with the coffee extract, via the outlet openings to a cup which, in use, is placed under the filter holder. As a result of the dimensions of the outflow openings very large bubbles cannot leave the interspace. This has the result that only bubbles having a desired maximum diameter can flow out of the filter holder, together with the coffee extract. In this example each outflow opening is subdivided into four partial outflow openings 48 (see Fig. 4). Each partial outflow opening 48 forms a through-flow surface having a diameter of, for instance, 1-5 mm. In this example the diameter d of each outflow opening 14 is approximately 6 mm.

Thus the cup is filled with coffee, on which a foam layer will be present. This is also called "cream coffee".

In particular, the diameter of the jet openings 18 increases in the direction of the coffee filter cartridge towards the bottom 6 (see also Fig. 3). This prevents the jet openings 18 from being easily clogged. In particular, the separation plate 16 is a screen plate comprising a plurality of screen openings 46 having a through-flow surface much smaller than the through-flow surface of the jet openings 18. Here, too, the diameter of the screen openings will preferably increase in the direction from the coffee filter cartridge to the bottom 6 of the filter holder (see also Fig. 3). The size of the surface of the smallest cross-section of a screen opening is, for instance, 3-10 times smaller than the size of the smallest cross-section of the jet openings 10. The size of the surface of the cross-section of the jet openings is at least 0.1 mm². Preferably, the size of the surface of the cross-section of each jet opening is at least 0.15 mm². In this example the jet openings are rectangular in cross-section with a dimension of approximately 1.4 by 0.15 mm. In this example the smallest diameter of each of the above screen openings is approximately 0.2 mm.

For completeness' sake, it is observed that the invention is by no means limited to the above-described possible embodiment. Thus, for instance, the separation plate 16 can be disposed nearer to or farther from the coffee filter cartridge. Moreover, the number of jet openings can be varied. Thus it is also conceivable that the separation plate is provided with 6, 8 or more jet openings. Such variations are all deemed to fall within the scope of the invention as defined by the claims.

## Claims

1. An assembly (1) comprising a filter holder (2) and a coffee filter (4) which is filled with ground coffee for preparing a cup of coffee with a small-bubble foam layer, a bottom (6) of the filter holder (2) being provided with at least one outflow opening (14) and the coffee filter (4) being removably positioned in the filter holder (2) at some distance from the bottom (6) of the filter holder (2), wherein at some distance from the bottom (22) of the coffee filter (4) a separation plate (16), provided with at least one opening (18), is located between the lower side of the coffee filter (4) and the bottom (6) of the filter holder (2), an interspace (20) being located between the lower side of the separation plate (16) and the bottom (6) of the filter holder (2) **characterized in that**, the coffee filter (4) comprises a paper filter (34) via which coffee extract can flow out of the coffee filter (4) in the direction of the bottom (6) wherein the coffee filter (4) is a disposable filter cartridge filled with ground coffee and the bottom (22) of the coffee filter (4) at least mainly consists of filter paper (34) wherein there is a free liquid path between the coffee filter (α) and the separation plate (16), the at least one opening being a jet opening (18) for generating a jet of coffee extract.

2. An assembly according to claim 1, **characterized in that** the bottom (6) of the filter holder (2) is bowl-shaped.

3. An assembly according to claim 1 or 2, **characterized in that** the separation plate (16) is a screen plate comprising a plurality of screen openings (46) having a through-flow surface much smaller than the through-flow surface of the at least one jet opening (18).

4. An assembly according to claim 3, **characterized in that** the diameter of the screen openings (46) increases in the direction from the coffee filter towards the bottom of the filter holder.

5. An assembly according to claim 3 or 4, **characterized in that** the size of the surface of the smallest cross-section of a screen opening (46) is 3-10 times smaller than the size of the smallest cross-section of the at least one jet opening (18).

6. An assembly according to any of the preceding claims, **characterized in that** the diameter of the at least one jet opening (18) increases in the direction from the coffee filter cartridge (4) towards the bottom (6) of the filter holder (2).

7. An assembly according to any of the preceding claims, **characterized in that** the smallest cross-section of the at least one jet opening (18) has such dimensions that, in use, a coffee extract jet is forced into the interspace.

8. An assembly according to any of the preceding claims, **characterized in that** the size of the surface of the cross-section of the at least one jet opening (18) is at least 0.1 mm².

9. An assembly according to claim 8, **characterized in that** the size of the surface of the cross-section of the at least one jet opening (18) is at least 0.15 mm².

10. An assembly according to any of the preceding claims, **characterized in that** the at least one jet opening (18) is rectangular in cross-section.

11. An assembly according to any of the preceding claims, **characterized in that** the separation plate (16) is provided with a plurality of jet openings (18).

12. An assembly according to claim 11, **characterized in that** the separation plate (16) is provided with 4-6 jet openings (18).

13. An assembly according to any of the preceding claims, **characterized in that** the coffee filter (4) consists of a bottom (22), an upright side wall (26), and a top wall (24), at least part of the top wall being formed by filter paper (34).

14. An assembly according to any of the preceding claims, **characterized in that** the at least one outflow opening (14) has at least one through-flow surface having a diameter of 1-5 mm.

15. An assembly according to any of the preceding claims, **characterized in that**, the at least one jet opening (18) lays in the plane of the separation plate.

16. A coffee maker for making coffee provided with an assembly according to any of the preceding claims 1-15.

## Patentansprüche

1. Ein Zusammenbau (1), der Folgendes beinhaltet: einen Filterhalter (2) und einen Kaffeefilter (4), der für die Bereitung einer Tasse Kaffee mit einer feinporigen Schaumschicht mit Kaffeepulver gefüllt wird, einen Boden (6) des Filterhalters (2), der mit wenigstens einer Ausflussöffnung (14) versehen ist, und bei welchem der Kaffeefilter (4), in einiger Entfernung zum Boden (6) des Filterhalters (2), entnehmbar in den Filterhalter (2) eingesetzt ist, worin sich, in einiger Entfernung zum Boden (22) des Kaffeefilters (4), zwischen der unteren Seite des Kaffeefilters (4) und dem Boden (6) des Filterhalters (2), eine Separationsplatte (16) befindet, die mit wenigstens einer Öffnung (18) versehen ist, bei welchem sich ein Zwischenraum (20) zwischen der unteren Seite der Separationsplatte (16) und dem Boden (6) des Filterhalters (2) befindet, welcher dadurch charakterisiert ist, dass der Kaffeefilter (4) einen Papierfilter (34) beinhaltet, durch welchen Kaffeeextrakt aus dem Kaffeefilter (4) in Richtung auf den Boden (6) heraus fileßen kann, worin der Kaffeefilter (4) eine Einweg-Filterpatrone ist, die mit Kaffeepulver gefüllt ist, und der Boden (22) des Kaffeefilters (4) in der Hauptsache aus Filterpapier (34) besteht, worin es einen freien Weg für die Flüssigkeit zwischen dem Kaffeefilter (4) und der Separationsplatte (16) gibt, und die wenigstens eine Öffnung eine Ausströmöffnung (18) ist, um einen Strahl Kaffeeextrakt zu erzeugen.

2. Ein Zusammenbau gemäß Anspruch 1, welcher dadurch charakterisiert ist, dass der Boden (6) des Filterhalters (2) schüsselförmig ist.

3. Ein Zusammenbau gemäß Anspruch 1 oder 2, welcher dadurch charakterisiert ist, dass die Separationsplatte (16) eine Siebplatte ist, die eine Vielzahl von Sieböffnungen (46) beinhaltet, deren Durchflussoberfläche viel kleiner als die Durchflussoberfläche der wenigstens einen Ausströmöffnung (18) ist.

4. Ein Zusammenbau gemäß Anspruch 3, welcher dadurch charakterisiert ist, dass der Durchmesser der Sieböffnungen (46) in der Richtung von dem Kaffeefilter auf den Boden des Filterhalters hin zunimmt.

5. Ein Zusammenbau gemäß Anspruch 3 oder 4, welcher dadurch characterisiert ist, dass die Größe der Oberfläche des kleinsten Querschnitts einer Sieböffnung (46) 3-10 mal kleiner als die Größe des kleinsten Querschnitts der wenigstens einen Ausströmöffnung (18) ist.

6. Ein Zusammenbau gemäß irgendeinem der vorausgegangenen Ansprüche, welcher dadurch charakterisiert ist, dass der Durchmesser der wenigstens einen Ausströmöffnung (18) in der Richtung von der Kaffeefilterpatrone (4) auf den Boden (6) des Filterhalters (2) hin zunimmt.

7. Ein Zusammenbau gemäß irgendeinem der vorausgegangenen Ansprüche, welcher dadurch charakterisiert ist, dass der kleinste Querschnitt der wenigstens einen Ausströmöffnung (18) so bemessen ist, dass der Strahl Kaffeeextrakt während des Betriebs in den Zwischenraum hinein gezwungen wird.

8. Ein Zusammenbau gemäß irgendeinem der vorausgegangenen Ansprüche, welcher dadurch charakterisiert ist, dass die Größe der Oberfläche des Querschnitts der wenigstens einen Ausströmöffnung (18) wenigstens 0,1 mm² beträgt.

9. Ein Zusammenbau gemäß Anspruch 8, welcher dadurch charakterisiert ist, dass die Größe der Oberfläche des Querschnitts der wenigstens einen Ausströmöffnung (18) wenigstens 0,15 mm² beträgt.

10. Ein Zusammenbau gemäß irgendeinem der vorausgegangenen Ansprüche, welcher dadurch charakterisiert ist, dass die wenigstens eine Ausströmöffnung (18) einen rechteckigen Querschnitt hat.

11. Ein Zusammenbau gemäß irgendeinem der vorausgegangenen Ansprüche, welcher dadurch charakterisiert ist, dass die Separationsplatte (16) mit einer Vielzahl von Ausströmöffnungen (18) versehen ist.

12. Ein Zusammenbau gemäß Anspruch 11, welcher dadurch charakterisiert ist, dass die Separationsplatte (16) mit 4-6 Ausströmöffnungen (18) versehen ist.

13. Ein Zusammenbau gemäß irgendeinem der vorausgegangenen Ansprüche, welcher dadurch charakterisiert ist, dass der Kaffeefilter (4) aus einem Boden (22), einer aufrechten Seitenwand (26) und einer oberen Wand (24) besteht, wobei wenigstens ein Teil der oberen Wand aus Filterpapier (34) gebildet wird.

14. Ein Zusammenbau gemäß irgendeinem der vorausgegangenen Ansprüche, welcher dadurch charakterisiert ist, dass die wenigstens eine Ausflussöffnung (14) über wenigstens eine Durchflussoberfläche mit einem Durchmesser von 1-5 mm verfügt.

15. Ein Zusammenbau gemäß irgendeinem der vorausgegangenen Ansprüche, welcher dadurch charakterisiert ist, dass die wenigstens eine Ausströmöffnung (18) in der Ebene der Separationsplatte liegt.

16. Ein Kaffeebereiter zur Bereitung von Kaffee, der mit einem Zusammenbau gemäß irgendeinem der vorausgegangenen Ansprüche 1-15 versehen ist.

## Revendications

1. Dispositif (1) comprenant un support de filtre (2) et un filtre à café (4) rempli de café moulu pour préparer une tasse de café avec une couche de mousse à petites bulles, un fond (6) du support de filtre (2) comportant au moins une ouverture de sortie (14) et le filtre à café (4) étant placé de façon amovible dans le support de filtre (2) à quelque distance du fond (6) du support de filtre (2), dans lequel, à quelque distance du fond (22) du filtre à café (4), une plaque de séparation (16), comportant au moins une ouverture (18), est située entre le côté inférieur du filtre à café (4) et le fond (6) du support de filtre (2), un espace intercalaire (20) étant situé entre le côté inférieur de la plaque de séparation (16) et le fond (6) du support de filtre (2), **caractérisé par le fait que** le filtre à café (4) comprend un filtre en papier (34) à travers lequel un extrait de café peut s'écouler hors du filtre à café (4) dans la direction du fond (6), dans lequel le filtre à café (4) est une cartouche de filtre à jeter remplie de café moulu et le fond (22) du filtre à café (4) au moins consiste principalement en papier filtre (34) dans lequel se trouve un chemin libre pour liquide entre le filtre à café (4) et la plaque de séparation (16), l'au moins une ouverture étant une ouverture pour jet (18) pour engendrer un jet d'extrait de café.

2. Dispositif selon la revendication 1, **caractérisé par le fait que** le fond (6) du support de filtre (2) est en forme de bol.

3. Dispositif selon l'une des revendications 1 et 2, **caractérisé par le fait que** la plaque de séparation (16) esc une plaque écran comprenant une pluralité d'ouvertures d'écran (46) ayant une surface de traversée bien plus petite que la surface de traversée de l'au moins une ouverture pour jet (18).

4. Dispositif selon la revendication 3, **caractérisé par le fait que** le diamètre des ouvertures, d'écran (46) croit dans la direction allant du filtre à café vers le fond du support de filtre.

5. Dispositif selon l'une des revendications 3 et 4, **caractérisé par le fait que** la taille de la surface de la plus petite section transversale d'une ouverture d'écran (46) est de 3 à 10 fois plus petite que la taille de la plus petite section transversale de l'au moins une ouverture pour jet (18).

6. Dispositif selon l'une quelconque des revendications précédentes, **caractérisé par le fait que** le diamètre de l'au moins une ouverture pour jet (18) croît dans la direction allant de la cartouche de filtre à café (4) vers le fond (6) du support de filtre (2).

7. Dispositif selon l'une quelconque des revendications précédentes, **caractérisé par le fait que** la plus petite section transversale de l'au moins une ouverture pour jet (18) a des dimensions telles que, en fonctionnement, un jet d'extrait de café est forcé dans l'espace intercalaire.

8. Dispositif selon l'une quelconque des revendications précédentes, **caractérisé par le fait que** la taille de la surface de la section transversale de l'au moins une ouverture pour jet (18) est d'au moins 0,1 mm².

9. Dispositif selon la revendication 8, **caractérisé par le fait que** la taille de la section transversale de l'au moins une ouverture pour jet (19) est d'au moins 0,15 mm².

10. Dispositif selon l'une quelconque des revendications précédentes, **caractérisé par le fait que** l'au moins une ouverture pour jet (18) a une section transversale rectangulaire.

11. Dispositif selon l'une quelconque des revendications précédentes, **caractérisé par le fait que** la plaque de séparation (16) comporte une pluralité d'ouvertures pour jet (18).

12. Dispositif selon la revendication 11, **caractérisé par le fait que** la plaque de séparation (16) comporte de 4 à 6 ouvertures pour jet (18).

13. Dispositif selon l'une quelconque des revendications précédentes, **caractérisé par le fait que** le filtre à café (4) consiste en un fond (22), une paroi latérale verticale (26), et une paroi de dessus (24), au moins une partie de la paroi de dessus étant formée de papier filtre (34).

14. Dispositif selon l'une quelconque des revendications précédentes, **caractérisé par le fait que** l'au moins une ouverture de sortie (14) a au moins une surface de passage de diamètre entre 1 et 5 mm.

15. Dispositif selon l'une quelconque des revendications précédentes, **caractérisé par le fait que** l'au moins une ouverture pour jet (18) se trouve dans le plan de la plaque de séparation.

16. Appareil à café pour préparer du café, comportant un dispositif selon l'une quelconque des revendications 1 à 15.
